**Europäisches Patentamt**

**European Patent Office**

**Office européen des brevets**

(11) Publication number : **0 500 250 A1**

(12) **EUROPEAN PATENT APPLICATION**

(21) Application number : **92301105.0**

(22) Date of filing : **11.02.92**

(51) Int. Cl.⁵ : **F41H 7/04,** B62D 29/04

(30) Priority : **11.02.91 ZA 911002**

(43) Date of publication of application :
**26.08.92 Bulletin 92/35**

(84) Designated Contracting States :
**AT BE CH DE DK ES FR GB GR IT LI LU MC NL PT SE**

(71) Applicant : **GREY IMPACT (PROPRIETARY) LIMITED**
**152 Hendrik Verwoerd Drive**
**Randburg, Transvaal (ZA)**

(72) Inventor : **Hirsch, Manfred**
**152 Hendrik Verwoerd Drive**
**Randburg, Transvaal (ZA)**

(74) Representative : **Brown, John David**
**FORRESTER & BOEHMERT**
**Franz-Joseph-Strasse 38**
**W-8000 München 40 (DE)**

(54) **Armoured vehicles.**

(57) In a method of constructing an armoured vehicle (10), a ballistically resistant vehicle body structure (16) made of fibre reinforced resin is manufactured, by moulding. The body structure (16) is then mounted on a vehicle chassis (12) so that the body structure (16) forms the body of the vehicle (10). The body structure (16) may be a one-piece moulding forming the entire vehicle body, or it can be made of interconnected body sections (20A, 20B, 20C).

EP 0 500 250 A1

FIG 1

## BACKGROUND TO THE INVENTION

THIS invention relates to armoured vehicles.

Conventionally, armoured vehicles are made up of thick steel panels. In each case, the thickness of each panel is determined by the ballistic threat which is anticipated. Thus in cases where the threat is from AP (armour-piercing) projectiles, the panel will be thicker than in cases where the threat is merely from shrapnel or the like. The result is an armoured vehicle which is extremely heavy and bulky, with attendant losses in manoeuvrability and speed.

## SUMMARY OF THE INVENTION

A first of the invention provides a method of constructing an armoured vehicle, the method comprising the steps of manufacturing, by moulding, a ballistically resistant vehicle body structure made of fibre reinforced resin, and of mounting the body structure on a vehicle chassis so that the body structure forms the body of the vehicle.

The body structure may be manufactured as a one-piece moulding. Alternatively, the body structure may be manufactured as an assembly of moulded body sections connected to one another.

The preferred method comprises the steps of making a plug, typically of wood, having an external shape corresponding to the internal shape of the vehicle body or body section, pulling a mould from the plug, and moulding a one-piece body structure or body section in the mould.

To achieve the desired anti-ballistic properties, it is preferred that the body structure is manufactured to have a relatively hard outer portion defining an outer strike surface and a relatively more flexible inner portion formed integrally with the other portion. Typically, the outer portion is formed of fibre reinforcement in epoxy resin, and the inner portion is formed of fibre reinforcement in polyester resin. To achieve the desired integral structure, the outer and inner portions can be formed by alternatively applying sheets of fibre reinforcement and resin in the mould, each sheet of fibre reinforcement being laid prior to curing of the preceding application of resin.

Conveniently, the body structure or body sections are cured under ambient conditions.

A second aspect of the invention provides an armoured vehicle constructed by the method summarised above.

## BRIEF DESCRIPTION OF THE DRAWINGS

The invention will now be described in more detail, by way of example only, with reference to the accompanying drawings in which:

**Figure 1** shows a side view of an armoured vehicle made in accordance with the invention;

**Figure 2** shows a diagrammatic cross-section at the line 2-2 in Figure 1;

**Figure 3** shows a detail of a joint between two adjacent moulded sections; and

**Figure 4** shows a detail of an alternative joint between adjacent moulded sections.

## SPECIFIC DESCRIPTION

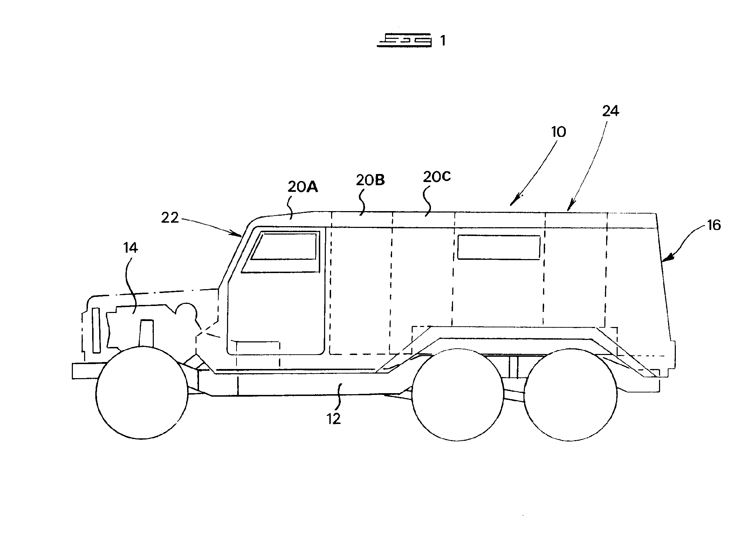

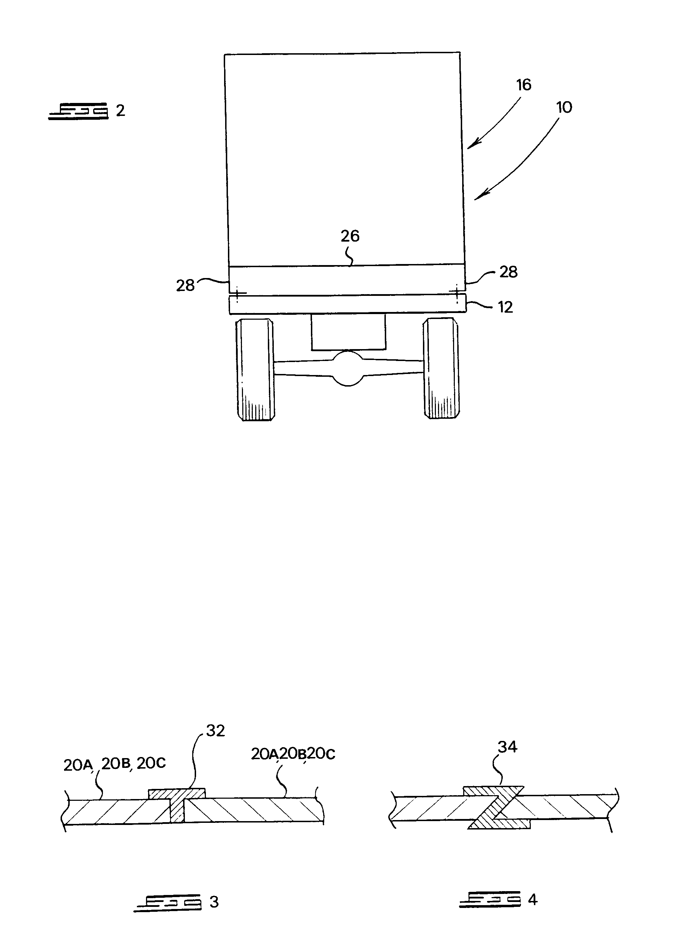

The vehicle 10 seen in Figures 1 and 2 is made in accordance with the method of the invention. To start with, the manufacturer is supplied with the chassis 12 of the vehicle, the engine 14, the steering system and the electrical system. The method of the invention is employed to form a body 16 for mounting on the chassis 12.

The first step in the method is to make a dummy plug, typically carved in wood, which has the desired final external shape of the body 16. Once the shape of the plug has been finalised, a mould made of epoxy resin or other suitable material and having an internal shape matching the desired final external shape of the body 16 is pulled from the plug. The epoxy mould is then used to mould a single shell body 16, i.e. a body which is of one-piece construction.

Having prepared the final mould from the dummy plug, a gelcoat is applied to the internal mould surface. The gelcoat may include a release agent and suitable pigmentation and has, embedded in it, chopped strand glass fibres. Next, the ballistically resistant body 16 is built up on the gelcoat layer.

The body 16 is built up in most cases to have a hard outer portion, or strike face, and a relatively more flexible inner portion. The strike face is constructed first in the mould. This is achieved by applying a suitable resin, in wet form, the inner gelcoat surface, for instance by brushing it on. While the resin is still wet, sheets of fibre reinforcement are laid out over the resin, and this is followed by the application of further resin and further sheets of fibre reinforcement to build up the desired thickness. The sheets of fibre reinforcement are in each case fully saturated with the resin material.

The preferred resin material for the construction of the strike face is an epoxy resin such as AB-83 epoxy resin. Typically, a resin of this kind is mixed with ther appropriate activator in the ratio resin:activator of 100:43 by mass.

In laying the strike face, the number of applications of fibre reinforcement and resin will be dependent on the ballistic threat which the resultant vehicle will undergo. For instance, when the anticipated threat is form higher velocity or AP projectiles the strike face is made thicker than in the case of lower velocity or softer projectiles, such as shrapnel.

Having formed the strike face, the inner, more flexible portion of the shell is laid in the mould, upon the strike face material. Once again, the inner portion is laid by alternating application of resin material and sheets of fibre resin as Polylite 8130. Various additives, such as a small percentage of cobalt occuate can be included. The number of applications required to make up the inner portion will be dependent on the final ballistic resistance that is required.

In some cases, the inner portion may be omitted entirely, with the shell then being laid with strike face material throughout.

The fibre reinforcement is in the form of woven sheets of glass fibre or polyaramid fibre, depending once again on the final anti-ballistic properties that are required.

The various applications of resin and reinforcing sheets are carried out in such a manner as to create and integral matrix of resin saturated reinforcing fibre as opposed to a laminated structure. Thus each application takes place before curing of the resin laid in the previous application.

As stated previously, the resin may include various additives. Such additives may be chosen to take account of ambient conditions, such as temperature and humidity and also to set desired curing time for the desired end product. Although curing possible merely under ambient conditions, curing may be promoted by the application of heat using, for instance, forced air or infra red lamps.

After curing the body is demoulded and is then bolted or otherwise fixed to the chassis to form the vehicle 10.

The construction of the shell is such that it has admirable anti-ballistic properties, to the extent that it will be able to prevent penetration of those ballistic projectiles which it has been designed to resist. It will of course be appreciated that a vehicle body designed to prevent penetration of low velocity or softer projectiles will not normally be suitable for preventing penetration of higher velocity or harder projectiles, so such a vehicle body is considered to be anti-ballistic only insofar as the lower velocity or softer projectiles are concerned.

In each case, the hard strike face will act to stop the ballistic projectile and to flatten it out so that it presents a larger surface area than would otherwise be the case. The more flexible inner portion of the shell, which is present in the vast majority of cases, then dissipates the energy of the projectile.

A vehicle body 16 of the kind described above has numerous advantages compared to convientional steel armouring, besides the fact of its armouring capabilities. The resin structure of the body renders it non-corrosive. It is relatively light and may require no finishing or painting. When compared to a steel fabrication system, the manufacture of the moulded body involves considerably less time cost. Because a moulding process used, it is possible to produce a body with complicated shapes which would not be possible with steel plate. Also, it can be repaired with little difficulty in the event of minor damage.

The invention is not limited to the production of a single shell or one-piece body. The body can be made up of a number of different sections, each moulded generally in the manner described above. For instance, as illustrated by broken lines in the drawing, the body could be made up of individual sections 20A, 20B, 20C and so on which are fixed to the chassis 12 and to one another. Alternatively, the cab 22 or load bay cover 24 of the illustrated vehicle could be provided by separate mouldings.

Figure 2 diagrammatically illustrated the manner in which a vehicle body formed in the manner described above can be connected to the vehicle chassis 12. The vehicle body in this case includes a false floor 26 and has longitudinally extending flanges 28 at either side which are bolted to the chassis 12.

It should be noted that the chassis 12 may be of a convientional design, in which case the vehicle body 16 is designed to cooperate with the conventional chassis shape. Alternatively, the chassis may be purpose made for a vehicle which is to be constructed.

Figure 3 and 4 illustrate two alternatives for connecting the body sections 20A, 20B, 20C and so on to one another. In Figure 3, the adjacent edges of two sections are located against the opposite sides of the web of a ballistically resistant steel tee-piece 32. The flange of the tee-piece is bonded to the inner surfaces of the sections using a suitable epoxy adhesive bond. In Figure 4, the tee-piece is replaced by a ballistically resistant steel sections 34 of Z-shape, with the flanges of the Z-shape bonded to the surfaces of the sections as illustrated. There are of course many other possibilities with the choice in each case being determined by the ballistic threat which is apprehended.

In cases where the a number of sections are connected to one another to form the body 16, the moulding of the various sections can be assisted by a vacuum forming technique.

In cases where there is a high threat of high velocity ballistic impacts, further security can be provided by adhering ballistically resistant ceramic tiles, typically of alumina, zirconia or boron carbide to the outside surface of the moulded body.

## Claims

1. A method of constructing an armoured vehicle, characterised in that the method comprises the steps of manufacturing, by moulding, a ballistically resistant vehicle body structure (16) made of fibre reinforced resin, and of mounting the body structure (16) on a vehicle chassis (12) so that the body structure (16) forms the body of the vehicle.

2. A method according to claim 1 characterised in that the body structure (16) is manufactured as a one-piece moulding.

3. A method according to claim 1 characterised in that the body structure (16) is manufactured as an assembly of moulded body sections (20A, 20B, 20C) connected to one another.

4. A method according to claim 2 or claim 3 characterised in that the method comprises the steps of making a plug having an external shape corresponding to the internal shape of the vehicle body or body section (20A, 20B, 20C), pulling a mould from the plug, and moulding a one-piece body structure (16) or body section (20A, 20B, 20C) in the mould.

5. A method according to claim 4 characterised in that the plug is made of wood.

6. A method according to any one of the preceding claims characterised in that the body structure (16) is manufactured to have a relatively hard outer portion defining an outer strike surface and a relatively more flexible inner portion formed integrally with the outer portion.

7. A method according to claim 6 characterised in that the outer portion is formed of fibre reinforcement in epoxy resin.

8. A method according to claim 7 characterised in that the inner portion is formed of fibre reinforcement in polyester resin.

9. A method according to any one of claims 6 to 8 characterised in that the outer and inner portions are formed by alternately applying sheets of fibre reinforcement and resin in the mould, each sheet of fibre reinforcement being laid prior to curing of the preceding application of resin.

10. A method according to either one of claims 2 or 3 characterised in that the body structure (16) or body sections (20A, 20B, 20C) are cured under ambient conditions.

11. A method according to any one of the preceding claims characterised in that ballistically resistant tiles are adhered to the outer surface of the body structure.

12. An armoured vehicle characterised in that the vehicle (10) is constructed by the method claimed in any one of the preceding claims.

Fig. 1

16

10

26

28

28

12

Fig. 2

32

20A, 20B, 20C

20A 20B 20C

34

Fig. 3

Fig. 4

**European Patent Office**

## EUROPEAN SEARCH REPORT

Application Number

EP    92 30 1105

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | INTERNATIONAL DEFENSE REVIEW. vol. 22, no. 7, July 1989, COINTRIN- GENEVA CH pages 969 - 970; R.M. OGORKIEWICZ: 'Armoured vehicle of composite material' * page 969, left column, paragraph 1-3 * * page 969, right column, paragraph 2-3 * | 1,3,1,12 | F41H7/04 B62D29/04 |
| Y | --- | 2,4-10 | |
| Y | GB-A-849 982 (MICKLEOVER TRANSPORT LTD) * page 2, line 1-15 * * page 2, line 22 - line 54 * * page 3, line 15 - line 54 * * page 3, line 93 - line 122 * | 2,4,5,9, 10 | |
| Y | --- US-A-3 771 418 (J. GULBIERZ) * column 3, line 53 - column 4, line 23; figures 1-4 * --- | 6-9 | |
| A | US-A-2 883 233 (B. BECKLEY) * column 2, line 66 - column 3, line 18; figure 8 * | 1,3,4,6, 7,9,10 | **TECHNICAL FIELDS SEARCHED (Int. Cl.5 )** F41H B62D |
| A | --- US-A-4 705 716 (JINSHENG TANG) * column 1, line 5-10 * * column 2, line 49 - column 4, line 2 * --- | 2,4,7,8, 9,10 | |
| A | US-A-4 351 558 (F. MUELLER) --- | | |
| A | US-A-2 363 573 (T. COSTA) ----- | | |

The present search report has been drawn up for all claims

| Place of search | Date of completion of the search | Examiner |
|---|---|---|
| THE HAGUE | 30 JUNE 1992 | VAN DER PLAS J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)